# EUROPEAN PATENT APPLICATION

(11) **EP 4 640 590 A1**
(43) Date of publication of application: **29.10.2025**
(21) Application number: 24783959.0
(22) Date of filing: 22.01.2024
(51) Int. Cl.: B65G 1/04, B65G 1/137, G06Q 10/08

(54) **GOODS COLLECTION AND TRANSPORTATION SYSTEM AND METHOD, AND RELATED DEVICE**

(30) Priority: 07.04.2023 CN 202310401605
(71) Applicant: Hai Robotics Co., Ltd., Shenzhen, Guangdong 518000 (CN)
(72) Inventor: CHEN, Cheng, Shenzhen, Guangdong 518000 (CN); SONG, Tongjuan, Shenzhen, Guangdong 518000 (CN); FU, Hao, Shenzhen, Guangdong 518000 (CN); LAN, Zhipeng, Shenzhen, Guangdong 518000 (CN)
(74) Representative: Gulde & Partner
(86) International application number: PCT/CN2024/073530
(87) International publication number: WO 2024/207874

(57) **Abstract**

Embodiments of this application disclose a system and a method for cargo collection transport and a related device. The system for cargo collection transport includes a conveyor transport module, a transportation server configured to control the conveyor transport module to transmit a container, a cargo collection module configured to store the container, and a handling robot configured to transport the container. The conveyor transport module may circulate the container between the cargo collection module and an opening of a consolidation warehouse, and the handling robot may circulate the container between a third-level conveyor and a rack. The conveyor transport module includes a first-level conveyor, a second-level conveyor, and the third-level conveyor. One end of the first-level conveyor is disposed at the opening of the consolidation warehouse. Another end extends into the consolidation warehouse. At least one second-level conveyor is connected in an extension direction of the first-level conveyor. At least one third-level conveyor is connected to each second-level conveyor. A side of each third-level conveyor in the extension direction is provided with at least one cargo collection module. This application is beneficial to improving flexibility of cargo collection transportation.

## Description

### CROSS-REFERENCES

This application claims priority to Chinese Patent Application No. 202310401605.0, filed with the China National Intellectual Property Administration on April 7, 2023 and entitled " SYSTEM AND METHOD FOR CARGO COLLECTION AND TRANSPORT AND RELATED DEVICE", which is incorporated herein by reference in its entirety.

### TECHNICAL FIELD

This application relates to the field of intelligent warehousing technologies, and specifically, to a system and a method for cargo collection and transport and a related device.

### BACKGROUND OF THE INVENTION

Currently, common cargo collection manners include two types: partitioned cargo collection and non-partitioned cargo collection. Partitioned cargo collection refers to a solution in which storage space of a consolidation warehouse is divided, so that the same materials are stored in a fixed area. When the order workload is substantial, handling robots in the consolidation warehouse in this manner are prone to causing congestion. Non-partitioned cargo collection refers to a manner in which storage space of a consolidation warehouse is not divided into areas, and all storage space of the consolidation warehouse can be used for storing a certain type of material. When the order workload in the consolidation warehouse in this manner is minimal, handling robots in the consolidation warehouse still needs to spend a large amount of time in the consolidation warehouse moving in a large area, which reduces working efficiency.

### SUMMARY OF THE INVENTION

Embodiments of this application provide a method for cargo collection transport and a related device, to improve efficiency of cargo collection transportation.

According to a first aspect, an embodiment of this application provides a system for cargo collection transport. The system for cargo collection transport includes a transportation server, a conveyor transport module, a handling robot, and a plurality of cargo collection modules;
the transportation server is configured to control start and stop and a transport direction of the conveyor transport module;
the conveyor transport module is configured to transmit a container, so that the container circulates between the cargo collection module and an opening of a consolidation warehouse, the conveyor transport module includes a first-level conveyor, a second-level conveyor, and a third-level conveyor, one end of the first-level conveyor is disposed at the opening of the consolidation warehouse, another end extends into the consolidation warehouse, at least one second-level conveyor is connected in an extension direction of the first-level conveyor, and at least one third-level conveyor is connected to each second-level conveyor; and at least one cargo collection module is disposed on a side of each third-level conveyor in the extension direction;
the cargo collection module is configured to store the container, the cargo collection module is provided with a rack, and the container is stored on the rack; and
the handling robot is configured to transport the container, so that the container circulates between the third-level conveyor and the rack.

It can be seen that, in this embodiment, by using the conveyor transport module, for a plurality of containers in the same wave, the container of each target cargo collection module may be merged and transported from a warehouse. Alternatively, by using the conveyor transport module, the plurality of containers are diverted and transported into the warehouse. The handling robot only needs to perform an operation related to transporting in the target cargo collection module, which can reduce a length of a path on which the handling robot needs to move. In this way, movement efficiency of the handling robot is improved, and efficiency of transporting the container is improved. In addition, during specific implementation, an extension deployment direction of a conveyor at each level in the conveyor transport module and the quantity of conveyors at each level deployed in the conveyor transport module may further be adjusted according to an actual requirement, thereby improving flexibility of deployment of the cargo collection transport system.

With reference to the first aspect, in a possible implementation, one third-level conveyor is connected to each access point on the second-level conveyor, and the cargo collection module is disposed on at least one side of the third-level conveyor in the extension direction.

With reference to the first aspect, in a possible implementation, two third-level conveyors in parallel are connected to each access point on the second-level conveyor, and the cargo collection module is disposed on an opposite side of the two third-level conveyors.

With reference to the first aspect, in a possible implementation, each third-level conveyor is provided with an ejection port and a transfer apparatus corresponding to each cargo collection module in the extension direction of the third-level conveyor, and the transfer apparatus is configured to transfer the container on the third-level conveyor to the ejection port; or the transfer apparatus is configured to transfer the container at the ejection port to the third-level conveyor.

With reference to the first aspect, in a possible implementation, at least one aisle is formed through arranging the rack of the cargo collection module, and one handling robot manages the at least one aisle.

With reference to the first aspect, in a possible implementation, when the handling robot manages the aisle, the third-level conveyor is provided with the transfer apparatus and the ejection port corresponding to each aisle.

With reference to the first aspect, in a possible implementation, each of the plurality of cargo collection modules is provided with a charging station, and the charging station is configured to charge the handling robot.

According to a second aspect, an embodiment of this application provides a method for cargo collection transport, applied to a transport server in a cargo collection transport system, where the transport server is configured to control a handling robot in the cargo collection transport system, the cargo collection transport system includes the transport server, a conveyor transport module, a cargo collection module, and the handling robot, the conveyor transport module includes a first-level conveyor, a second-level conveyor, and a third-level conveyor, one end of the first-level conveyor is disposed at an opening of a consolidation warehouse, another end extends into the consolidation warehouse, at least one second-level conveyor is connected in an extension direction of the first-level conveyor, and at least one third-level conveyor is connected to each second-level conveyor; at least one cargo collection module is disposed on a side of each third-level conveyor in the extension direction; and the method includes:
obtaining a plurality of containers for the same wave;
determining at least one target cargo collection module corresponding to the plurality of containers; and
controlling the handling robot corresponding to the at least one target cargo collection module to perform a first inbound operation or a first outbound operation on the plurality of containers; where
the first inbound operation includes: controlling the handling robot corresponding to the at least one target cargo collection module to transport the plurality of containers from each third-level conveyor to the at least one target cargo collection module when the plurality of containers are diverted and transported from the opening of the consolidation warehouse to each second-level conveyor to which the at least one target cargo collection module correspondingly belongs through the first-level conveyor, and diverted and transported to each third-level conveyor to which the at least one target cargo collection module correspondingly belongs through each second-level conveyor, and transported to a position in which the at least one target cargo collection module lies through each third-level conveyor; and
the first outbound operation includes: controlling the handling robot corresponding to the at least one target cargo collection module to take out the plurality of containers from a rack of the at least one target cargo collection module, and transferring the plurality of containers to each third-level conveyor to which the at least one target cargo collection module correspondingly belongs, so that the plurality of containers are transported to each second-level conveyor to which the at least one target cargo collection module correspondingly belongs through each third-level conveyor, transported and merged to the first-level conveyor through each second-level conveyor, and transported to the opening of the consolidation warehouse through the first-level conveyor.

It may be seen that, in this embodiment, by allocating, according to the quantity of the plurality of containers corresponding to the wave, the plurality of containers to at least one target cargo collection module, flexibility of a position of the target cargo collection module at which the container is allocated to enter the warehouse and a position of the target cargo collection module at which the container is allocated to exit from the warehouse is improved, which is beneficial to reducing workload of a single target cargo collection module, and enabling the plurality of target cargo collection modules to synchronously operate. In this way, total cargo collection efficiency is improved. At the same time, by using the conveyor transport module, the container of each target cargo collection module may be merged and transported from the warehouse. Alternatively, by using the conveyor transport module, the plurality of containers are diverted and transported into the warehouse. It may further reduce a length of a path on which the handling robot needs to move, thereby improving movement efficiency of the handling robot, and improving efficiency of transporting the container.

With reference to the second aspect, in a possible implementation, the determining at least one target cargo collection module corresponding to the plurality of containers includes:
obtaining a single transport quantity of the handling robot corresponding to the target cargo collection module;
comparing the single transport quantity with the quantity of the plurality of containers; and
determining at least two cargo collection modules as the target cargo collection modules when the quantity of the plurality of containers is greater than the single transport quantity.

With reference to the second aspect, in a possible implementation, the determining at least one target cargo collection module corresponding to the plurality of containers further includes:
evenly distributing transport tasks of the same wave of the plurality of containers to the at least two cargo collection modules.

According to a third aspect, an embodiment of this application provides a method for cargo collection transport, applied to a transportation server in a cargo collection transport system, where the transportation server is configured to control a conveyor transport module in the cargo collection transport system, the cargo collection transport system includes the transportation server, a transport server, the conveyor transport module, a cargo collection module, and a handling robot, the transport server is configured to control the handling robot; the conveyor transport module includes a first-level conveyor, a second-level conveyor, and a third-level conveyor, one end of the first-level conveyor is disposed at an opening of a consolidation warehouse, another end extends into the consolidation warehouse, at least one second-level conveyor is connected in an extension direction of the first-level conveyor, and at least one third-level conveyor is connected to each second-level conveyor; at least one cargo collection module is disposed on a side of each third-level conveyor in the extension direction; and the method includes:
obtaining at least one target cargo collection module, wherein the at least one target cargo collection module is a cargo collection module corresponding to a plurality of containers for the same wave; and
controlling, according to the at least one target cargo collection module, the conveyor transport module to perform a second inbound operation or a second outbound operation on the plurality of containers; where
the second inbound operation includes: controlling the first-level conveyor to divert and transport the plurality of containers from the opening of the consolidation warehouse to each second-level conveyor to which the at least one target cargo collection module correspondingly belongs, and controlling each second-level conveyor to divert and transport the plurality of containers to each third-level conveyor to which the at least one target cargo collection module correspondingly belongs, and controlling each third-level conveyor to transport the plurality of containers to a position in which the at least one target cargo collection module lies, so that the handling robot corresponding to the at least one target cargo collection module transports the plurality of containers from each third-level conveyor to the at least one target cargo collection module; and
the second outbound operation includes: controlling each third-level conveyor to transport the plurality of containers to each second-level conveyor to which the at least one target cargo collection module correspondingly belongs, and controlling each second-level conveyor to transport and divert the plurality of containers to the first-level conveyor, and controlling the first-level conveyor to transport the plurality of containers to the opening of the consolidation warehouse when the handling robot corresponding to the at least one target cargo collection module takes out the plurality of containers from a rack of the at least one target cargo collection module, and transfers the plurality of containers to each third-level conveyor.

It may be seen that, in this embodiment, by allocating, according to the quantity of the plurality of containers corresponding to the wave, the plurality of containers to at least one target cargo collection module, flexibility of a position of the target cargo collection module at which the container is allocated to enter the warehouse and a position of the target cargo collection module at which the container is allocated to exit from the warehouse is improved, which is beneficial to reducing workload of a single target cargo collection module, and enabling the plurality of target cargo collection modules to synchronously operate. In this way, total cargo collection efficiency is improved. At the same time, by using the conveyor transport module, the container of each target cargo collection module may be merged and transported from the warehouse. Alternatively, by using the conveyor transport module, the plurality of containers are diverted and transported into the warehouse. It may further reduce a length of a path on which the handling robot needs to move, thereby improving movement efficiency of the handling robot, and improving efficiency of transporting the container.

With reference to the third aspect, in a possible implementation, each third-level conveyor is provided with an ejection port and a transfer apparatus corresponding to each cargo collection module in the extension direction of the third-level conveyor, and the method further includes:
controlling, when each third-level conveyor transports the plurality of containers to the position in which the at least one target cargo collection module lies, each transfer apparatus corresponding to the at least one target cargo collection module to transfer the plurality of containers from each third-level conveyor to each ejection port corresponding to the at least one target cargo collection module, so that the handling robot transports the plurality of containers from each ejection port to the rack of the at least one target cargo collection module; and
controlling each transfer apparatus to transfer the plurality of containers from each ejection port to each third-level conveyor when the handling robot transports the plurality of containers from the rack of the at least one target cargo collection module to each ejection port, to transport the plurality of containers to the opening of the consolidation warehouse by using the conveyor transport module.

According to a fourth aspect, an embodiment of this application provides a device for cargo collection transport, applied to a transport server in a cargo collection transport system, where the transport server is configured to control a handling robot in the cargo collection transport system, the cargo collection transport system includes the transport server, a conveyor transport module, a cargo collection module, and the handling robot, the conveyor transport module includes a first-level conveyor, a second-level conveyor, and a third-level conveyor, one end of the first-level conveyor is disposed at an opening of a consolidation warehouse, another end extends into the consolidation warehouse, at least one second-level conveyor is connected in an extension direction of the first-level conveyor, and at least one third-level conveyor is connected to each second-level conveyor; at least one cargo collection module is disposed on a side of each third-level conveyor in the extension direction; and the device includes:
a first obtaining unit, configured to obtain a plurality of containers for the same wave;
a first determining unit, configured to determine at least one target cargo collection module corresponding to the plurality of containers; and
a first control unit, configured to control the handling robot corresponding to the at least one target cargo collection module to perform a first inbound operation or a first outbound operation on the plurality of containers; where
the first inbound operation includes: controlling the handling robot corresponding to the at least one target cargo collection module to transport the plurality of containers from each third-level conveyor to the at least one target cargo collection module when the plurality of containers are diverted and transported from the opening of the consolidation warehouse to each second-level conveyor to which the at least one target cargo collection module correspondingly belongs through the first-level conveyor, and diverted and transported to each third-level conveyor to which the at least one target cargo collection module correspondingly belongs through each second-level conveyor, and transported to a position in which the at least one target cargo collection module lies through each third-level conveyor; and
the first outbound operation includes: controlling the handling robot corresponding to the at least one target cargo collection module to take out the plurality of containers from a rack of the at least one target cargo collection module, and transferring the plurality of containers to each of the third-level conveyors to which the at least one target cargo collection module correspondingly belongs, so that the plurality of containers are transported to each second-level conveyor to which the at least one target cargo collection module correspondingly belongs through each of the third-level conveyors, transported and merged to the first-level conveyor through each second-level conveyor, and transported to the opening of the consolidation warehouse through the first-level conveyor.

According to a fifth aspect, an embodiment of this application provides a device for cargo collection transport, applied to a transportation server in a cargo collection transport system, where the transportation server is configured to control a conveyor transport module in the cargo collection transport system, the cargo collection transport system includes the transportation server, a transport server, the conveyor transport module, a cargo collection module, and a handling robot, the transport server is configured to control the handling robot; the conveyor transport module includes a first-level conveyor, a second-level conveyor, and a third-level conveyor, one end of the first-level conveyor is disposed at an opening of a consolidation warehouse, another end extends into the consolidation warehouse, at least one second-level conveyor is connected in an extension direction of the first-level conveyor, and at least one third-level conveyor is connected to each second-level conveyor; at least one cargo collection module is disposed on a side of each third-level conveyor in the extension direction; and the device includes:
a second obtaining unit, configured to obtain at least one target cargo collection module, wherein the at least one target cargo collection module is a cargo collection module corresponding to a plurality of containers for the same wave; and
a second control unit, configured to control, according to the at least one target cargo collection module, the conveyor transport module to perform a second inbound operation or a second outbound operation on the plurality of containers; where
the second inbound operation includes: controlling the first-level conveyor to divert and transport the plurality of containers from the opening of the consolidation warehouse to each second-level conveyor to which the at least one target cargo collection module correspondingly belongs, and controlling each second-level conveyor to divert and transport the plurality of containers to each third-level conveyor to which the at least one target cargo collection module correspondingly belongs, and controlling each third-level conveyor to transport the plurality of containers to a position in which the at least one target cargo collection module lies, so that the handling robot corresponding to the at least one target cargo collection module transports the plurality of containers from each third-level conveyor to the at least one target cargo collection module; and
the second outbound operation includes: controlling each third-level conveyor to transport the plurality of containers to each second-level conveyor to which the at least one target cargo collection module correspondingly belongs, and controlling each second-level conveyor to transport and divert the plurality of containers to the first-level conveyor, and controlling the first-level conveyor to transport the plurality of containers to the opening of the consolidation warehouse when the handling robot corresponding to the at least one target cargo collection module takes out the plurality of containers from a rack of the at least one target cargo collection module, and transfers the plurality of containers to each third-level conveyor.

According to a sixth aspect, an embodiment of this application provides a server, including a processor, a memory, a communication interface, and one or more programs. The one or more programs are stored in the memory and configured to be executed by the processor. The programs include instructions for performing the steps in the first aspect of the embodiments of this application.

According to a seventh aspect, an embodiment of this application provides a computer storage medium, storing a computer program for electronic data exchange. The computer program enables a computer to perform some or all of the steps described in the first aspect of the embodiments.

### BRIEF DESCRIPTION OF DRAWINGS

To describe the technical solutions in embodiments of this application or in the prior art more clearly, the following briefly introduces the accompanying drawings required for describing the embodiments or the prior art. Obviously, the accompanying drawings in the following description show merely some embodiments of this application, and a person of ordinary skill in the art may still derive other drawings from these accompanying drawings without creative efforts.
FIG. 1a is a schematic architectural diagram of a system for cargo collection transport according to an embodiment of this application;
FIG. 1b is a schematic architectural diagram of another system for cargo collection transport according to an embodiment of this application;
FIG. 1c is an example composition diagram of an electronic equipment according to an embodiment of this application;
FIG. 2 is a schematic layout diagram of a consolidation warehouse according to an embodiment of this application;
FIG. 3 is a schematic layout diagram of another consolidation warehouse according to an embodiment of this application;
FIG. 4 is a schematic layout diagram of still another cargo collection module according to an embodiment of this application;
FIG. 5 is a schematic flowchart of a method for cargo collection transport according to an embodiment of this application;
FIG. 6 is a schematic flowchart of another method for cargo collection transport according to an embodiment of this application;
FIG. 7a is a composition block diagram of functional units of a device for cargo collection transport according to an embodiment of this application;
FIG. 7b is a composition block diagram of functional units of another device for cargo collection transport according to an embodiment of this application; and
FIG. 7c is a composition block diagram of functional units of still another device for cargo collection transport according to an embodiment of this application.

### Reference numerals:

200: handling robot; 300: conveyor transport module; 310: first-level conveyor; 320: second-level conveyor; 330: third-level conveyor; 400: cargo collection module; 400a: aisle; 410: rack; 420: charging station.

### DETAILED DESCRIPTION

To make a person skilled in the art understand the solutions of this application better, the following clearly and completely describes the technical solutions in embodiments of this application with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

In the specification, claims, and accompanying drawings of this application, the terms "first", "second", and so on are intended to distinguish between different objects rather than describe a specific sequence. In addition, the terms "include", "have" and any variants thereof are intended to cover a non-exclusive inclusion. For example, a process, method, system, product, or apparatus that includes a series of steps or units is not limited to the listed steps or units, but optionally further includes a step or unit that is not listed, or optionally further includes another step or unit inherent to the process, method, product, or apparatus.

References to "embodiments" in this specification mean that particular features, structures, or characteristics described with reference to the embodiments may be included in at least one embodiment of this application. The occurrence of the phrase at various positions in the specification does not necessarily refer to the same embodiment, nor is an independent or alternative embodiment mutually exclusive to other embodiments. A person skilled in the art explicitly and implicitly understands that the embodiments described in this specification may be combined with other embodiments.

The following describes the embodiments of this application with reference to the accompanying drawings.

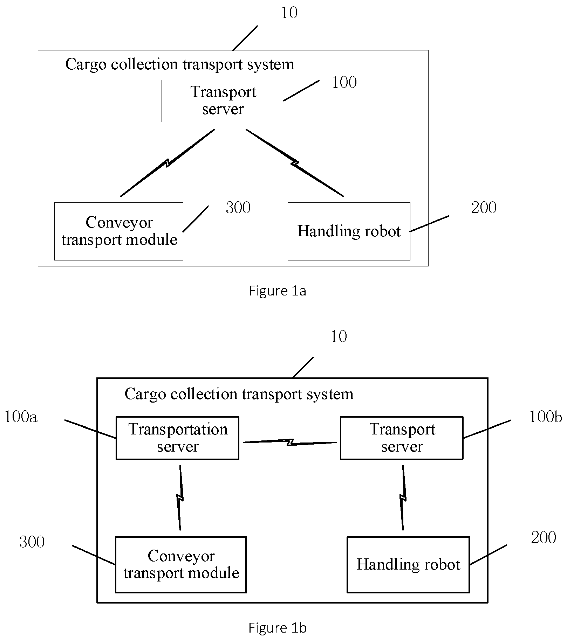

Referring to FIG. 1a, FIG. 1a is a schematic architectural diagram of a system for cargo collection transport according to an embodiment of this application. In a cargo collection transport system 10 shown in FIG. 1a, the cargo collection transport system 10 may specifically include a transport server 100, a handling robot 200, and a conveyor transport module 300. The transport server 100 may control motions of the handling robot 200 and the conveyor transport module 300. For example, the handling robot 200 is controlled to move to a particular position (for example, a position at which a container in the cargo collection module is located, a position of an ejection port corresponding to a third-level conveyor and the cargo collection module, and a position at which a charging station is located), and the handling robot 200 is controlled to take or place the container. For another example, start and stop and a transport direction of the conveyor transport module 300 is controlled. The handling robot 200 and the conveyor transport module 300 may perform corresponding operations according to control of the transport server 100.

As shown in FIG. 1a, the handling robot 200 and the conveyor transport module 300 may both be controlled by the transport server 100. Specifically, the transport server 100 may be communicatively connected to the handling robot 200 and the conveyor transport module 300. A manner in which the transport server 100 controls the handling robot 200 and the conveyor transport module 300 may be specifically sending a control instruction to the handling robot 200 and the conveyor transport module 300. The control instruction is used for instructing a to-be-performed operation to the handling robot 200 and the conveyor transport module 300. After receiving the control instruction, the handling robot 200 and the conveyor transport module 300 may implement a corresponding operation according to the control instruction.

Referring to FIG. 1b, FIG. 1b is a schematic architectural diagram of another system for cargo collection transport according to an embodiment of this application. In the cargo collection transport system 10 shown in FIG. 1b, the cargo collection transport system 10 may specifically include a transportation server 100a, a transport server 100b, a handling robot 200, and a conveyor transport module 300. The transportation server 100a is configured to control the conveyor transport module 300, and the transport server 100b is configured to control a motion of the handling robot 200. For example, the transportation server 100a controls start and stop and a transport direction of the conveyor transport module 300, and the like, and the conveyor transport module 300 may perform a corresponding operation according to control of the transportation server 100a. For another example, the transport server 100b may control the motion of the handling robot 200, for example, control the handling robot 200 to move to a particular position (for example, a position at which a container in the cargo collection module is located, a position of an ejection port corresponding to a third-level conveyor and the cargo collection module, and a position at which a charging station is located), control the handling robot 200 to take or place the container, and the like. The handling robot 200 may perform a corresponding operation according to control of the transport server 100b.

As shown in FIG. 1b, the conveyor transport module 300 and the handling robot 200 may be respectively controlled by the transportation server 100a and the transport server 100b. Specifically, the handling robot 200 is communicatively connected to the transport server 100b. The conveyor transport module 300 may be communicatively connected to the transportation server 100a. The transportation server 100a is communicatively connected to the transport server 100b. A manner in which the transportation server 100a and the transport server 100b separately control the conveyor transport module 300 or the handling robot 200 may be specifically sending a control instruction to the conveyor transport module 300 or the handling robot 200. The control instruction is used for instructing a to-be-performed operation to the conveyor transport module 300 or the handling robot 200. After receiving the control instruction, the conveyor transport module 300 or the handling robot 200 may perform a corresponding operation according to the control instruction.

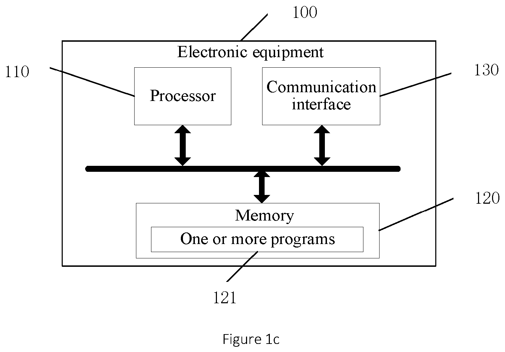

A composition structure of an electronic equipment in this application may be shown in FIG. 1c. The electronic equipment may be a transport server 100 shown in FIG. 1a, a transportation server 100a shown in FIG. 1b, a transport server 100b shown in FIG. 1b, a handling robot 200, a conveyor transport module 300, or the like. The electronic equipment may include a processor 110, a memory 120, a communication interface 130, and one or more programs 121. The one or more programs 121 are stored in the foregoing memory 120, and are configured to be executed by the foregoing processor 110. The one or more programs 121 include instructions for performing any step in the foregoing method embodiments.

The communication interface 130 is configured to support communication between the electronic equipment 100 and another equipment. For example, the processor 110 may be a Central Processing Unit (CPU), a general-purpose processor, a Digital Signal Processor (DSP), an Application-Specific Integrated Circuit (ASIC), a Field Programmable Gate Array (FPGA), or other programmable logic device, a transistor logic device, a hardware component, or any combination thereof. It may implement or execute various exemplary logical blocks, units, and circuits described with reference to content disclosed in the embodiments of this application. Alternatively, the processor may be a combination of processors implementing a computing function, for example, a combination of one or more microprocessors, or a combination of a DSP and a microprocessor.

The memory 120 may be a volatile memory or a non-volatile memory, or may include both a volatile memory and a non-volatile memory. The non-volatile memory may be a Read-only Memory (ROM), a Programmable ROM (PROM), an Erasable PROM (EPROM), an Electrically EPROM (EEPROM), or a flash memory. The volatile memory may be a Random Access Memory (RAM), and is used as an external cache. By way of example and not limitation, Random Access Memories (RAM) in many forms are available, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM).

During specific implementation, the processor 110 is configured to perform any step performed by the electronic equipment in the following method embodiments, and when data transmission such as sending is performed, the communication interface 130 may be selectively invoked to complete a corresponding operation.

It should be noted that the foregoing schematic structural diagram of the electronic equipment is merely an example, and the electronic equipment may specifically include more or fewer components, which is not limited herein.

The present disclosure provides a system for cargo collection transport. The cargo collection transport system includes a transportation server, a conveyor transport module, a handling robot, and a plurality of cargo collection modules. The transportation server is configured to control start and stop and a transport direction of the conveyor transport module. The conveyor transport module is configured to transmit a container, so that the container circulates between the cargo collection module and an opening of a consolidation warehouse. The conveyor transport module includes a first-level conveyor, a second-level conveyor, and a third-level conveyor. One end of the first-level conveyor is disposed at the opening of the consolidation warehouse, and another end extends into the consolidation warehouse. At least one second-level conveyor is connected in an extension direction of the first-level conveyor. At least one third-level conveyor is connected to each second-level conveyor. At least one cargo collection module is disposed on a side of each third-level conveyor in the extension direction. The cargo collection module is configured to store the container, the cargo collection module is provided with a rack, and the container is stored on the rack. The handling robot is configured to transport the container, so that the container circulates between the third-level conveyor and the rack.

The transportation server in this example may be the transport server 100 in FIG. 1a, or may be the transportation server 100a in FIG. 1b.

The first-level conveyor, the second-level conveyor, and the third-level conveyor may be transmission apparatuses such as transmission belts.

The first-level conveyor refers to a main transmission segment extending from the opening of the consolidation warehouse to the consolidation warehouse. The second-level conveyor refers to a transmission segment formed by a branch of the first-level conveyor, and no cargo collection module is disposed at a side of the second-level conveyor. The third-level conveyor refers to a transmission segment that is in communication with the second-level conveyor and whose side is provided with the cargo collection module.

The quantity of the second-level conveyors connected to the first-level conveyors, the quantity of the third-level conveyors connected to each second-level conveyor, and the quantity of the cargo collection modules on the third-level conveyors may all be adjusted according to an actual requirement, and are not further limited herein. An extension direction and a length of the first-level conveyor, the second-level conveyor, and the third-level conveyor may also be adjusted according to a landform of the consolidation warehouse. In this way, flexibility of deployment in the cargo collection transport system can be improved.

The cargo collection module refers to a unit module that includes at least one rack and that is configured to store a container. Each cargo collection module includes a rack, a charging station, and the like. The quantity of the racks in each cargo collection module, the quantity of the charging stations in each cargo collection module, the quantity of the handling robots configured for each cargo collection module, and the like are not further limited herein, and a layout may be flexibly adjusted according to a traffic requirement of a user. For example, the quantity of the cargo collection modules disposed in each third-level conveyor in the extension direction of the third-level conveyor may be increased, or the quantity of the third-level conveyors added to the second-level conveyors may be increased, so that the quantity of the cargo collection modules is increased in the extension direction of the third-level conveyor and on a side of the third-level conveyor that is perpendicular to the extension direction in the direction of the ground, thereby increasing an inbound and outbound flow of the consolidation warehouse. Alternatively, for example, a movement range of a handling robot in a single cargo collection module may be reduced by reducing the quantity of racks in the single cargo collection module, thereby improving movement efficiency of the handling robot in the single cargo collection module, increasing access efficiency of the cargo collection module, and increasing inbound and outbound efficiency of the system.

It can be seen that, by using the conveyor transport module, for a plurality of containers in the same wave, containers in each target cargo collection module may be merged and transported from a warehouse. Alternatively, by using the conveyor transport module, the plurality of containers are diverted and transported into the warehouse. The handling robot only needs to perform an operation related to transporting in the target cargo collection module, which can reduce a length of a path on which the handling robot needs to move. In this way, movement efficiency of the handling robot is improved, and efficiency of transporting the container is improved. In addition, during specific implementation, an extension deployment direction of a conveyor at each level in the conveyor transport module, the quantity of conveyors at each level deployed in the conveyor transport module, and the like may further be adjusted according to an actual requirement, thereby improving flexibility of deployment of the cargo collection transport system.

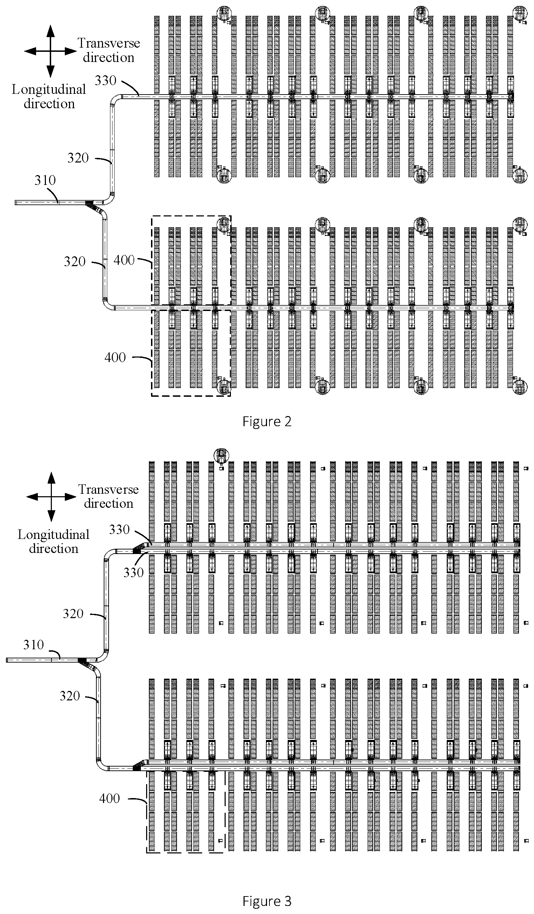

Exemplarily, referring to FIG. 2 to FIG. 4, a conveyor transport module 300, a handling robot 200, and a cargo collection module 400 in a cargo collection transport system are deployed in a consolidation warehouse. The conveyor transport module 300 includes a first-level conveyor 310310, a second-level conveyor 320, and a third-level conveyor 330. In the examples shown in FIG. 2 to FIG. 4, the third-level conveyor 330 extends in a transverse direction, and at least one third-level conveyor is arranged in a longitudinal direction. Each cargo collection module 400 may be connected to one third-level conveyor 330, so that the handling robot 200 managing each cargo collection module 400 can obtain a container from the corresponding third-level conveyor 330, and transport the container to a rack 410 of each cargo collection module 400, to complete inbound of the container. Alternatively, the handling robot 200 managing each cargo collection module 400 can transport a container on a rack 410 of each cargo collection module 400 to the corresponding third-level conveyor 330, to transport the container out of the warehouse. In the examples shown in FIG. 2 to FIG. 4, the second-level conveyor 320 may extend in the longitudinal direction, and at least one second-level conveyor is arranged on the same end side of all the third-level conveyors 330. An end of the third-level conveyor 330 is communicatively connected to any second-level conveyor 320, so that the container can be transmitted and circulated between the second-level conveyor 320 and the third-level conveyor 330. All the second-level conveyors 320 merge to the first-level conveyors 310, so that the container can be transmitted and circulated between the second-level conveyor 320 and the first-level conveyor 310. Another end of the first-level conveyor 310 may be located at an opening of the consolidation warehouse, so that the container can be transmitted into or out of the consolidation warehouse by using the first-level conveyor 310, thereby completing inbound or outbound of the container.

In a further example, the opening of the consolidation warehouse may be used as both an inbound port and an outbound port. During specific implementation, when completing a task of inbound and outbound of the container in the consolidation warehouse, the transport server in FIG. 1a or the transportation server in FIG. 1b may control transmission directions of the first-level conveyor, the second-level conveyor, and the third-level conveyor on a time basis. For example, in the time when the task of inbound is completed, the opening may be the inbound port, and the transmission directions of conveyors at each level may be: the first-level conveyor transmits to the second-level conveyor, and the second-level conveyor transmits to the third-level conveyor. In the time when the task of outbound is completed, the opening may be the inbound port, and the transmission directions of conveyors at each level may be: the third-level conveyor transmits to the second-level conveyor, and the second-level conveyor transmits to the first-level conveyor. In this configuration, the cargo collection transport system needs to occupy a smaller consolidation warehouse range, thereby improving an applicable range of the cargo collection transport system. In addition, in this configuration, the cargo collection transport system requires fewer apparatuses, which can reduce costs of transporting the container.

Alternatively, in another example, the consolidation warehouse may have two openings: the inbound port and the outbound port. At least one second-level conveyor and one first-level conveyor may be disposed at two side ends of the third-level conveyor. In this case, the two side ends of the third-level conveyor may be respectively communicatively connected to one second-level conveyor on each side, and the second-level conveyor on each side may be respectively merged to the first-level conveyor on the corresponding side. In this example, one end of one of the two first-level conveyors may be respectively in communication with the inbound port and the outbound port of the consolidation warehouse, to be respectively responsible for the task of inbound and outbound of the container in the consolidation warehouse. Specifically, the transport server in FIG. 1a or the transportation server in FIG. 1b may perform execution by controlling starting or stopping of each of two first-level conveyors, the second-level conveyor corresponding to each first-level conveyor, and the third-level conveyor when the task of inbound and outbound of the container needs to be completed. For example, when it is required to complete the task of inbound of the container in the consolidation warehouse, the first-level conveyor communicating with the inbound port, the second-level conveyor corresponding to the first-level conveyor, and the third-level conveyor may be started to cooperatively complete the task of inbound of the container. In this configuration, the cargo collection transport system may simultaneously perform the task of inbound of the container and the task of outbound of the container for different waves, to improve the flexibility of consolidation warehouse arrangement and improve the high efficiency of transporting the container in the entire cargo collection transport system.

Alternatively, in still another example, the consolidation warehouse may have at least two openings respectively used for entering the warehouse and exiting the warehouse. The conveyor transport module may be arranged on a plane parallel to the ground with at least two layers. At least one layer of the conveyor transport modules is configured to perform the task of inbound, and one end of the first-level conveyors in each layer of the conveyor transport modules is communicated with one inbound port. The at least one layer of the conveyor transport modules is configured to perform an outbound operation, and one end of the first-level conveyor in each layer of the conveyor transport modules is communicated with one outbound port. In this configuration, the transport server in FIG. 1a or the transportation server in FIG. 1b may simultaneously control each layer of the conveyor transport modules to separately perform the task of inbound and the task of outbound, thereby further improving efficiency of transporting the container by the cargo collection transport system.

With reference to FIG. 2, in a possible example, one third-level conveyor is connected to each access point on the second-level conveyor, and the cargo collection module is disposed on at least one side of the third-level conveyor in the extension direction.

The access point on the second-level conveyor refers to an interface that is used by the second-level conveyor to connect to the third-level conveyor.

Specifically, there may be a plurality of cargo collection modules corresponding to each third-level conveyor, and the plurality of cargo collection modules may be arranged on the same side of the third-level conveyor along the extension direction of the third-level conveyor. Alternatively, the plurality of cargo collection modules may be arranged on opposite sides of the third-level conveyor along the extension direction of the third-level conveyor.

It can be seen that, in this example, by connecting each access point of the second-level conveyor to one third-level conveyor, and disposing the plurality of cargo collection modules on one side or two sides of the third-level conveyor in the extension direction, a capacity of a storage container for the third-level conveyor and efficiency of transporting the container can be improved.

In a possible example, two third-level conveyors in parallel are connected to each access point on the second-level conveyor, and the cargo collection module is disposed on an opposite side of the two third-level conveyors.

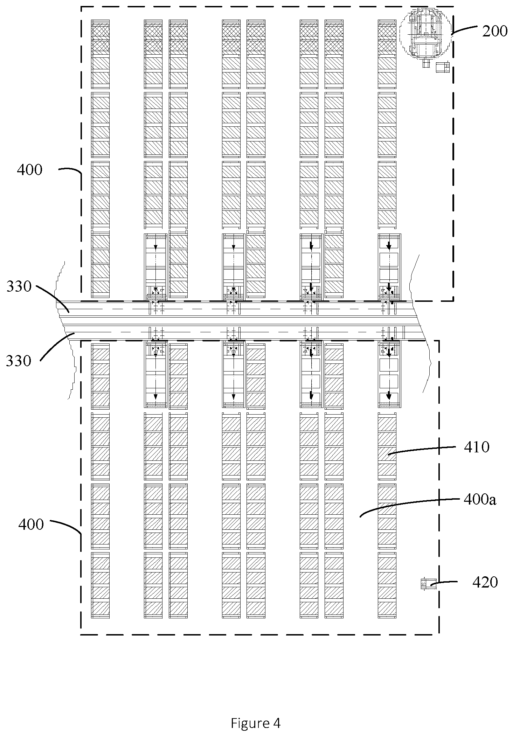

Specifically, as shown in FIG. 3 and FIG. 4, two third-level conveyors 330 may be arranged in parallel and intersect with the same access point of the second-level conveyor 320. A side, which faces away from the other, of each of the two third-level conveyors 330 in parallel is provided with the plurality of cargo collection modules 400.

During specific implementation, when the container is placed into the warehouse, the container may be allocated to at least one of the two third-level conveyors connected to the same access point. Specifically, when being transported to a target access point via the second-level conveyor, the container may be diverted from the target access point to the corresponding third-level conveyor, to transport the container to the corresponding cargo collection module by using the corresponding third-level conveyor. When each of the cargo collection modules corresponding to the two third-level conveyors connected to the same access point has a container that needs to exit from the warehouse, after transporting the container from the rack of the cargo collection module to the third-level conveyor, the handling robot may separately control the corresponding third-level conveyor to transport the container to the target access point, and then merge at the target access point into the second-level conveyor.

During specific implementation, the two third-level conveyors connected to the same access point may be connected at one end facing away from the access point. That is, the two third-level conveyors connected to the same access point are connected to form an annular conveyor. In this way, when the container is put into and out of the warehouse, and when the container enters the annular conveyor formed by the two third-level conveyors, the annular conveyor may be used to transport the container to a corresponding target cargo collection module when the container is put into the warehouse, or to an access point connected to the foregoing two third-level conveyors when the container is put out of the warehouse. If the target cargo collection module or the access point is processing another container, the annular conveyor may continue to transmit the container, so that the container is transmitted along the annular conveyor for one circle and then again returns to a position in which the target cargo collection module or the access point lies, to complete the inbound or outbound of the container. In this way, when the conveyor transport module is congested, or when transportation is not in time because the handling robot is transporting another container, the conveyor transport module may be controlled to continue to transmit the container, so that the container first continues to be in loop transportation on a loop conveyor, thereby avoiding the congestion.

It can be seen that, in this example, the two third-level conveyors are connected to each access point of the second-level conveyor. When a transportation flow is relatively small, a third-level conveyor matched with an access point may be controlled and started by using the transportation server, to reduce energy consumption of the conveyor transportation module while ensuring transportation of the container. When a transportation flow is relatively large, the transportation server may simultaneously control and start two third-level conveyors connected to the same access point. In this way, the container may be simultaneously transported by using two third-level conveyors in parallel, to improve a flow of the container to be transported by using the third-level conveyor, thereby improving the efficiency of transportation of the container. Meanwhile, in this example, the two third-level conveyors are connected to form an annular conveyor connected to the second-level conveyor by connecting ends of the two third-level conveyors, which helps increase storage locations of the container. In this way, when the container cannot be transmitted to the second-level conveyor or the cargo collection module in time, the container can be continuously transmitted on the annular conveyor formed by the two third-level conveyors, thereby avoiding congestion of transporting the container.

In a possible example, each third-level conveyor is provided with an ejection port and a transfer apparatus corresponding to each cargo collection module in the extension direction of the third-level conveyor, and the transfer apparatus is configured to transfer the container on the third-level conveyor to the ejection port; or the transfer apparatus is configured to transfer the container at the ejection port to the third-level conveyor.

The ejection port is disposed on a side of the third-level conveyor in the extension direction, can be connected to the cargo collection module, and is mainly used for temporarily storing the container. The ejection port may be a temporary storage rack for the temporary storage of the container. Alternatively, the ejection port may be a temporary storage station that is raised on the side of the third-level conveyor in the extension direction, or a conveyor.

The transfer apparatus is disposed on the side of the third-level conveyor in the extension direction, disposed on a side of the third-level conveyor that is faces away from the ground, or the like, and is configured to transfer the container between the third-level conveyor and the ejection port. The transfer apparatus may be a transmission belt with an omni wheel. In this way, whether the container is transmitted to the ejection port or continues to be transmitted along the extension direction of the third-level conveyor may be controlled. Alternatively, the transfer apparatus may be a robotic arm, a lifting transfer device, or the like. This is not limited again. The container may be circulated between the third-level conveyor and the ejection port by transporting the container.

During specific implementation, when entering into the warehouse, and when the third-level conveyor transports the container to a position in which the corresponding cargo collection module lies, the transfer apparatus corresponding to the cargo collection module transfers the container from the third-level conveyor to the ejection port, and then the handling robot corresponding to the cargo collection module transports the container from the ejection port to the rack. When the container is to exit from the warehouse, the handling robot may first transport the container from the rack to the ejection port, and then the transfer apparatus transfers the container at the ejection port to the third-level conveyor, so that the third-level conveyor transports the container to the second-level conveyor, and transports the container to the first-level conveyor through the second-level conveyor, to transport the container to the opening of the consolidation warehouse through the first-level conveyor.

It can be seen that, in this example, by providing the ejection port and the transfer apparatus corresponding to the cargo collection module, when the container reaches the cargo collection module, the container may be transferred out of the third-level conveyor and transferred into the ejection port for buffering. Compared with that the handling robot directly removes the container from the third-level conveyor, a problem that efficiency of transporting the container by the third-level conveyor is affected due to that the handling robot does not transport the container in time may be avoided, and overall transportation efficiency of the cargo collection transport system may be improved.

In a possible example, at least one aisle is formed through arranging the rack of the cargo collection module, and one handling robot manages the at least one aisle.

The cargo collection module refers to a unit module that is formed by at least one rack and that is used for storing a container. When the cargo collection module is provided with a plurality of racks, the plurality of racks may form at least one aisle for the handling robot to traverse. During specific implementation, at least one handling robot may be configured for one cargo collection module, and each handling robot may manage at least one aisle formed by the cargo collection module.

During specific implementation, referring to FIG. 4, a plurality of racks 410 are arranged in the cargo collection module 400, and the plurality of racks 410 may be arranged to form at least one aisle 400a. The aisle 400a is used for the handling robot 200 to move through. Specifically, when the handling robot 200 takes or places the container, the transport server may control, according to the quantity of handling robots 200 configured by the cargo collection module 400, the handling robot 200 to move in the at least one aisle 400a. Exemplarily, if one handling robot 200 is configured for each aisle 400a in the consolidation warehouse, the transport server may separately control each handling robot 200 to move in the aisle 400a correspondingly responsible for the handling robot, and control the handling robot 200 to take the container on the rack 410 forming the aisle 400a managed by the handling robot or control the handling robot 200 to place the container on the rack 410 forming the aisle 400a managed by the handling robot, to avoid mutual interference between the handling robots 200. Alternatively, in another example, if the quantity of the aisles 400a managed by the cargo collection module 400 is greater than the quantity of the handling robots 200 configured in the consolidation warehouse for the cargo collection module 400, the transport server may control a single handling robot 200 to move in the at least one aisle 400a formed by the cargo collection module 400, or control a single robot 200 to move in the cargo collection module 400, and control the handling robot 200 to take the container on the rack 410 forming the aisle 400a managed by the handling robot, or control the handling robot 200 to place the container on the rack 410 forming the aisle 400a managed by the handling robot.

During specific implementation, the handling robot may be a single-material robot or a multi-material robot. The single-material robot is provided with a temporary storage location, and the single-material robot may transport a container each time. The multi-material robot is provided with two temporary storage locations, and the multi-material robot may transport at least one container each time. In this example, the handling robot may select the multi-material robot, to further improve transportation efficiency of the cargo collection module. Alternatively, the handling robot may select the single-material robot, to reduce a bearing weight of the handling robot, thereby improving efficiency of moving and transporting the container by the handling robot.

It can be seen that, in this example, by enabling one handling robot to manage at least one aisle, it can be ensured that the handling robot in the cargo collection module can take the container on the rack forming the aisle managed by the handling robot or control the handling robot to place the container on the rack forming the aisle managed by the handling robot, to ensure that the handling robot only needs to move in the cargo collection module managed by the handling robot and does not need to move in the entire consolidation warehouse, thereby improving movement efficiency of the handling robot and improving efficiency of transporting the container.

In a possible example, when the handling robot manages the aisle, the third-level conveyor is provided with the transfer apparatus and the ejection port corresponding to each aisle.

Specifically, when one handling robot manages one aisle, and the third-level conveyor is provided with the transfer apparatus and the ejection port corresponding to each aisle, the handling robot in each aisle only needs to move in the aisle managed by the handling robot, to complete the task of taking the container from the ejection port, placing the container at the ejection port, taking the container from the rack, placing the container on the rack, or the like.

It can be seen that, in this example, when one handling robot manages one aisle, the transfer apparatus and the ejection port are provided for each aisle. The length of a working line of each handling robot may be further shortened, the efficiency of transporting the container by the cargo collection transport system may be improved, and the magnitude of traffic that can be processed by the cargo collection transport system may be further improved.

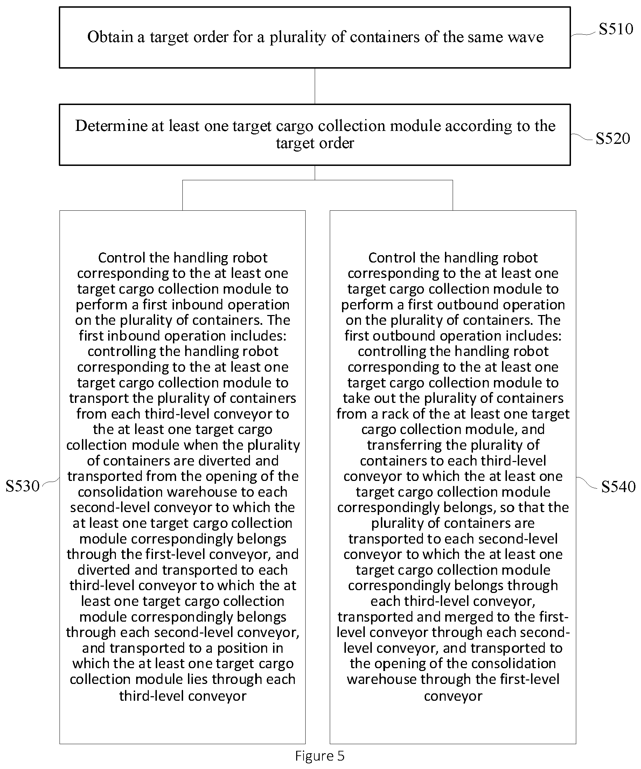

Referring to FIG. 5, FIG. 5 is a schematic flowchart of a method for cargo collection transport according to an embodiment of this application. The method may be applied to the transport server 100 in the cargo collection transport system shown in FIG. 1a or the transport server 100b in the cargo collection transport system shown in FIG. 1b. As shown in FIG. 5, the method for cargo collection transport includes the following steps.

S510. Obtain a plurality of containers for the same wave.

The wave refers to an order set that constrains an outbound nature of the plurality of containers according to at least one of factors such as time, regions, material attributes of the containers, and the quantity of the containers. The time may be a time period or a moment. One wave includes at least one order. Each order correspondingly includes content such as the material attributes corresponding to the containers, the quantity of the containers, and wave information. The material attributes of the plurality of containers corresponding to the same wave may be different.

Specifically, the wave may be divided based on a time period. For example, containers corresponding to all orders placed within 8 o'clock to 10 o'clock belong to the same wave, and containers corresponding to orders placed within 10 o'clock to 12 o'clock belong to another wave. Alternatively, the wave may be divided based on the quantity. For example, all the containers corresponding to the first quantity of accumulated orders belong to the same wave. Exemplarily, when the quantity of placed orders accumulates to two thousand orders, all the containers corresponding to the two thousand orders belong to the same wave. Alternatively, the wave may be divided based on the region. For example, all the containers corresponding to all the orders placed in city A belong to the same wave. Alternatively, the wave may be divided based on the time and region. For example, all the containers that need to be shipped to city A at nine o'clock belong to the same wave, and all the containers that need to be shipped to city B at ten o'clock belong to the same wave.

S520. Determine at least one target cargo collection module corresponding to the plurality of containers.

When there are a plurality of target cargo collection modules, the plurality of target cargo collection modules may be connected to the same third-level conveyor, or may be connected to different third-level conveyors.

During specific implementation, when the container is to enter the warehouse, after the transport server obtains a plurality of containers of the same wave, the transport server may first obtain a storage status of each cargo collection module in a current consolidation warehouse, and then determine a cargo collection module with an idle storage location as a preselected target. Then, the transport server may determine at least one target cargo collection module in the preselected target according to the quantity of containers of the plurality of containers, a location relationship between the preselected targets, a location relationship between the preselected target and an inbound port of the consolidation warehouse, and the like.

Alternatively, during specific implementation, when the container is to exit from the warehouse, after obtaining the plurality of containers of the same wave, the transport server may directly position a cargo collection module at which the plurality of containers of the wave are located, to determine these cargo collection modules as at least one target cargo collection module.

S530. Control the handling robot corresponding to the at least one target cargo collection module to perform a first inbound operation on the plurality of containers. The first inbound operation includes: controlling the handling robot corresponding to the at least one target cargo collection module to transport the plurality of containers from each third-level conveyor to the at least one target cargo collection module when the plurality of containers are diverted and transported from the opening of the consolidation warehouse to each second-level conveyor to which the at least one target cargo collection module correspondingly belongs through the first-level conveyor, and diverted and transported to each third-level conveyor to which the at least one target cargo collection module correspondingly belongs through each second-level conveyor, and transported to a position in which the at least one target cargo collection module lies through each third-level conveyor.

During specific implementation, each container may be correspondingly provided with an identification code, and content such as a material attribute of the container, wave information, and a corresponding target cargo collection module may be obtained by scanning the identification code. A code scanner is provided at an upstream of each access point of the first-level conveyor connected to the second-level conveyor and each access point of the second-level conveyor connected to the third-level conveyor. The upstream refers to a side on which each access point in the conveyor transport module is correspondingly diverted.

Specifically, after the container enters the consolidation warehouse through the first-level conveyor, the container may be transmitted by the first-level conveyor. After the code scanner on the first-level conveyor scans the container, the target cargo collection module corresponding to the container may be obtained, to divert the container to the second-level conveyor to which the target cargo collection module belongs. After the container enters the second-level conveyor, as there may be a plurality of containers on the second-level conveyor, after code scanning is performed on the container by using a code scanner disposed on the second-level conveyor, a target cargo collection module of the container is further determined, so that the container is diverted to a third-level conveyor to which the target cargo collection module belongs, and the third-level conveyor is enabled to transport the container to a position in which the corresponding target cargo collection module lies, thereby controlling a handling robot of the target cargo collection module to transport the container to a rack of the target cargo collection module.

S540. Control the handling robot corresponding to the at least one target cargo collection module to perform a first outbound operation on the plurality of containers. The first outbound operation includes: controlling the handling robot corresponding to the at least one target cargo collection module to take out the plurality of containers from a rack of the at least one target cargo collection module, and transferring the plurality of containers to each third-level conveyor to which the at least one target cargo collection module correspondingly belongs, so that the plurality of containers are transported to each second-level conveyor to which the at least one target cargo collection module correspondingly belongs through each third-level conveyor, transported and merged to the first-level conveyor through each second-level conveyor, and transported to the opening of the consolidation warehouse through the first-level conveyor.

During specific implementation, when the container is to exit from the warehouse, after determining the position of the target cargo collection module at which the plurality of containers are located, the transport server may directly control handling robots of these target cargo collection modules to transport the plurality of containers to the corresponding third-level conveyor, so that the third-level conveyor collects the plurality of containers to the corresponding second-level conveyor, and then the second-level conveyor collects the plurality of containers to the first-level conveyor. In this way, the first-level conveyor is enabled to transport the plurality of containers to an outbound port.

Specifically, when the outbound operation or the inbound operation is performed, the task of transporting the container by the handling robot may be controlled in parallel with the task of transporting the container by the conveyor transport module. That is, the handling robot and the conveyor transport module may work in parallel. In this way, the efficiency of transporting the containers may be improved, and accumulation of the containers on the conveyor transport module may be avoided.

During specific implementation, if currently there is inbound and outbound tasks only for the wave, the transportation server may control only the third-level conveyor corresponding to the target cargo collection module, the second-level conveyor corresponding to the third-level conveyor, and the first-level conveyor to be started to perform work. The remaining second-level conveyors and third-level conveyors are not started. In this way, the conveyor transport module may be accurately controlled to transport the containers, thereby reducing power consumption. In addition, the transportation server may control and adjust transportation directions of the first-level conveyor, the second-level conveyor, and the third-level conveyor when the container enters the warehouse and exits from the warehouse, to complete the task of inbound and outbound of the container.

It may be seen that, in this embodiment, by allocating, according to the quantity of the plurality of containers corresponding to the wave, the plurality of containers to at least one target cargo collection module, flexibility of a position of the target cargo collection module at which the container is allocated to enter the warehouse and a position of the target cargo collection module at which the container is allocated to exit from the warehouse is improved, which is beneficial to reducing workload of a single target cargo collection module, and enabling the plurality of target cargo collection modules to synchronously operate. In this way, total cargo collection efficiency is improved. At the same time, by using the conveyor transport module, the container of each target cargo collection module may be merged and transported from the warehouse. Alternatively, by using the conveyor transport module, the plurality of containers are diverted and transported into the warehouse. It may further reduce a length of a path on which the handling robot needs to move, thereby improving movement efficiency of the handling robot, and improving efficiency of transporting the container.

In a possible example, the determining at least one target cargo collection module corresponding to the plurality of containers includes: obtaining a single transport quantity of the handling robot corresponding to the target cargo collection module; comparing the single transport quantity with the quantity of the plurality of containers; and determining at least two cargo collection modules as the target cargo collection modules when the quantity of the plurality of containers is greater than the single transport quantity.

The single transport quantity of the handling robot corresponding to the target cargo collection module refers to the quantity of containers that all the handling robots arranged in the target cargo collection module can transport each time. Specifically, the single transport quantity may be related to a form of the handling robot, or may be related to the quantity of handling robots corresponding to the target cargo collection module. Exemplarily, If the handling robot is a single-material robot, four handling robots are correspondingly deployed on a single target cargo collection module, and a single transport quantity of the target cargo collection module is four containers.

During specific implementation, after determining the quantity of the containers, the transport server may compare the quantity of the containers with the single transport quantity of the handling robot corresponding to the single cargo collection module. If the quantity of the containers is greater than the single transport quantity, it may be determined that the quantity of target cargo collection modules is at least two. If the quantity of the containers is less than or equal to the single transport quantity, the transport server may allocate all the containers to the same cargo collection module, that is, the quantity of target cargo collection modules is one.

It can be seen that, in this example, when the quantity of the plurality of containers is greater than the single transport quantity of the target cargo collection module, the task of inbound and outbound for the plurality of containers is allocated to at least two cargo collection modules. In this way, operating pressure of performing container transportation by the single target cargo collection module may be reduced, and the efficiency of transporting the container may be improved by performing container transportation in parallel by the at least two cargo collection modules, thereby improving the efficiency of outbound or inbound of the container.

In a possible example, the determining at least one target cargo collection module corresponding to the plurality of containers further includes: evenly distributing transport tasks of the plurality of containers of the same wave to the at least two cargo collection modules.

Specifically, when the transport server determines that there are at least two target cargo collection modules, the transport server may split, according to the quantity of the containers and the quantity of the target cargo collection modules, the inbound task for the plurality of containers into transport tasks corresponding to the quantity of the target cargo collection modules, and each transport task corresponds to the same quantity of containers that need to be transported. Exemplarily, if the quantity of the plurality of containers of the same wave is 20, and the quantity of the determined target cargo collection modules is two, the wave may be split into two transport tasks. When an inbound operation of the plurality of containers for the wave is performed, each transport task is to respectively transport every ten containers to one target cargo collection module.

It can be seen that, in this example, the transport task for the container is evenly distributed to each cargo collection module, to ensure consistent execution progresses of all the cargo collection modules, thereby improving time-consistency of execution of the transport task of the container by all the cargo collection modules, and improving the efficiency of transporting all the containers.

In a possible example, each of the plurality of cargo collection modules is provided with a charging station, and the charging station is configured to charge the handling robot.

It can be seen that, in this example, by disposing the charging station on the cargo collection module, a distance for the handling robot to be charged and move can be shortened, thereby improving convenience of charging the handling robot.

In a possible example, when detecting that a battery level of the handling robot is lower than a preset battery level, the transport server controlling the handling robot may control the handling robot to move to a position in which the charging station lies, and to be connected to the charging station for charging.

The preset battery level is a preset battery level value for controlling the handling robot to charge.

During specific implementation, the transport server may obtain the running status of the handling robot when the transport server detects that the battery level of the handling robot is less than the preset battery level. If the handling robot is in an idle state (that is, there is no transport task of a container that needs to be executed by the handling robot currently), the transport server may directly control the handling robot to move to a position of a charging station for charging. If the handling robot is in a working state (that is, the current handling robot is executing a transport task of a container), the transport server may first determine whether the battery level of the handling robot can support the handling robot to complete the transport task, and move to a position of a charging station for charging after the transport task is completed. If the handling robot can be supported by the battery level, the transport server may control, after the handling robot completes executing the transport task, the handling robot to move to the position of the charging station for charging. If the handling robot cannot be supported by the battery level, the handling robot may be directly controlled to head to the charging station for charging.

Specifically, when the battery level of the handling robot cannot support the handling robot to complete a corresponding task, the transport server may select, according to a distance, an idle handling robot in a neighboring cargo collection module as a temporary handling robot of the target cargo collection module, and control the idle handling robot to execute the transport task that is not completed by the foregoing handling robot. In this way, it is ensured that a container transport task of the target cargo collection module can be completed, thereby avoiding affecting the inbound or outbound of the container. Alternatively, when the same target cargo collection module is provided with a plurality of handling robots, the transport server may allocate a transport task that is not completed by a to-be-charged handling robot to another handling robot located on the same target cargo collection module, thereby ensuring reliability of completing the corresponding task and avoiding affecting running of another cargo collection module.

It can be seen that, in this example, by disposing the charging station in the consolidation warehouse, and controlling the handling robot to move to the position of the charging station for charging when the battery level of the handling robot is less than the preset battery level, it can be ensured that each cargo collection module can run normally and orderly, and impact on completion efficiency of transporting the container due to a low battery level of the handling robot can be avoided.

In a possible example, there are a plurality of charging stations, and the controlling the handling robot to move to a position in which a charging station lies includes: determining a charging station that is in an idle state among the plurality of charging stations; determining a charging distance between each charging station in the idle state and the handling robot; determining a charging station corresponding to a shortest charging distance as a target charging station; and controlling the handling robot to move to the position in which the target charging station lies.

The charging station in the idle state refers to a charging station that has not been connected to and charged by another handling robot, and has not been reserved by the transport server for another handling robot. The charging distance refers to a distance for the handling robot to move to the charging station.

During specific implementation, the transport server may first obtain a position of the handling robot and positions of all the charging stations in the idle state, and then determine the charging distance between the handling robot and each charging station in the idle state. Then, a charging station closest to the handling robot is determined as a target charging station, and the handling robot is controlled to move to the position in which the target charging station lies for connection and charging. Specifically, after the target charging station is determined, the transport server may reserve the target charging station, to prevent the charging station from being occupied by another handling robot.

It can be seen that, in this example, the transport server selects, for a handling robot needing to be charged, the charging station closest to the handling robot for charging, to reduce a length of a route in which the handling robot needs to move for charging, thereby shortening a time taken by the handling robot to move to the charging station, and improving charging efficiency of the handling robot.

Referring to FIG. 4, in a possible example, at least one charging station 420 may be disposed on a cargo collection module 400. A handling robot 200 in the same cargo collection module 400 may be charged by using the charging station 420 configured corresponding to the cargo collection module 400. This not only facilitates charging of the cargo collection module 400 located at a side of a third-level conveyor 330, but also facilitates management of each cargo collection module 400 by a transport server. During specific implementation, when controlling the handling robot 200 to move to the charging station 420 for charging, the transport server may control the handling robot 200 to move from a common area in which the cargo collection module 400 faces away from the side of the third-level conveyor 330 to a position of the charging station 420 for charging, to avoid affecting work of another handling robot.

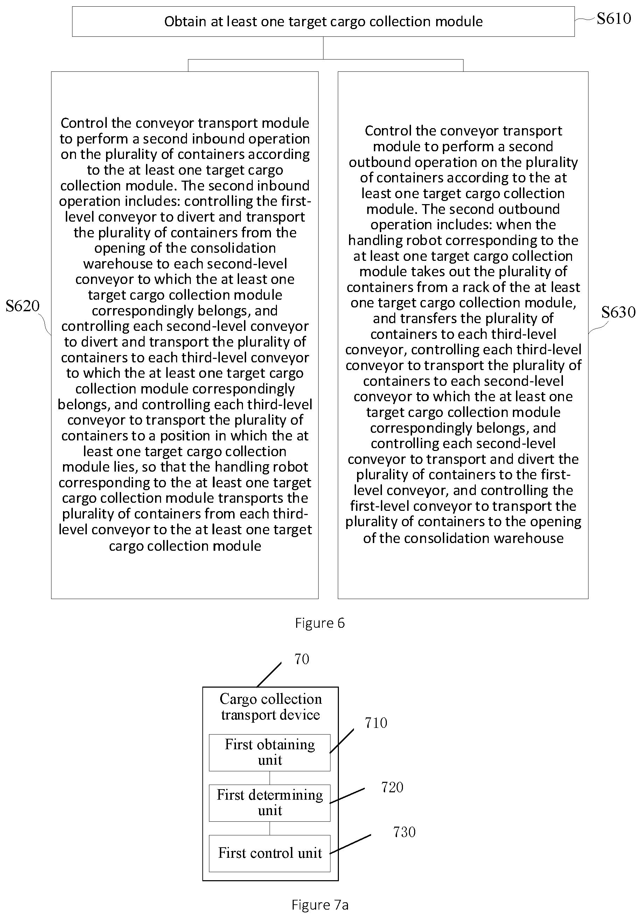

Referring to FIG. 6, FIG. 6 is a schematic flowchart of a method for cargo collection transport according to an embodiment of this application. The method may be applied to the transport server 100 in the cargo collection transport system shown in FIG. 1a or the transportation server 100a in the cargo collection transport system shown in FIG. 1b. As shown in FIG. 6, the method for cargo collection transport includes the following steps.

S610. Obtain at least one target cargo collection module.

The at least one target cargo collection module is a cargo collection module corresponding to a plurality of containers for the same wave.

During specific implementation, the at least one target cargo collection module may be determined and obtained by the foregoing handling robot. Details are not described herein again.

S620. Control the conveyor transport module to perform a second inbound operation on the plurality of containers according to the at least one target cargo collection module. The second inbound operation includes: controlling the first-level conveyor to divert and transport the plurality of containers from the opening of the consolidation warehouse to each second-level conveyor to which the at least one target cargo collection module correspondingly belongs, and controlling each second-level conveyor to divert and transport the plurality of containers to each third-level conveyor to which the at least one target cargo collection module correspondingly belongs, and controlling each third-level conveyor to transport the plurality of containers to a position in which the at least one target cargo collection module lies, so that the handling robot corresponding to the at least one target cargo collection module transports the plurality of containers from each third-level conveyor to the at least one target cargo collection module.

During specific implementation, each container may be correspondingly provided with an identification code, and content such as a material attribute of the container, wave information, and a corresponding target cargo collection module may be obtained by scanning the identification code. A code scanner is provided at the upstream of each access point of the first-level conveyor connected to the second-level conveyor and each access point of the second-level conveyor connected to the third-level conveyor. The upstream refers to a side on which each access point in the conveyor transport module is correspondingly diverted.

Specifically, the transportation server controls a first-level conveyor to transport the plurality of boxes, and may control a code scanner disposed on the first-level conveyor to scan the plurality of containers separately, to determine a target cargo collection module respectively corresponding to the plurality of containers, thereby controlling the first-level conveyor to correspondingly divert the plurality of containers to a corresponding second-level conveyor. After the plurality of containers respectively enter the corresponding second-level conveyor, as a container on the second-level conveyor is not unique, the transportation server may scan the plurality of containers again by using the code scanner disposed on each second-level conveyor, to determine the target cargo collection module corresponding to the plurality of containers, further control each second-level conveyor to divert the plurality of containers to the corresponding third-level conveyor, and control each third-level conveyor to respectively transport the plurality of containers to a position in which the target cargo collection module corresponding to the containers lies. In this way, the handling robot can correspondingly obtain a container and transport the container to a rack of the target cargo collection module.

S630. Control the conveyor transport module to perform a second outbound operation on the plurality of containers according to the at least one target cargo collection module. The second outbound operation includes: when the handling robot corresponding to the at least one target cargo collection module takes out the plurality of containers from a rack of the at least one target cargo collection module, and transfers the plurality of containers to each third-level conveyor, controlling each third-level conveyor to transport the plurality of containers to each second-level conveyor to which the at least one target cargo collection module correspondingly belongs, and controlling each second-level conveyor to transport and divert the plurality of containers to the first-level conveyor, and controlling the first-level conveyor to transport the plurality of containers to the opening of the consolidation warehouse.

During specific implementation, after the plurality of containers are transported to the corresponding third-level conveyor, the transportation server may control each third-level conveyor to be transported to the corresponding second-level conveyor, to collect the plurality of containers to the corresponding second-level conveyor. Then, each second-level conveyor is controlled to be transported to the first-level conveyor, so that the plurality of containers on each second-level conveyor are collected to the first-level conveyor. Further, the first-level conveyor is controlled to be transported to a cargo exiting port, to transport the plurality of containers out of the warehouse.

It may be seen that, in this embodiment, by allocating, according to the quantity of the plurality of containers corresponding to the wave, the plurality of containers to at least one target cargo collection module, flexibility of a position of the target cargo collection module at which the container is allocated to enter the warehouse and a position of the target cargo collection module at which the container is allocated to exit from the warehouse is improved, which is beneficial to reducing workload of a single target cargo collection module, and enabling the plurality of target cargo collection modules to synchronously operate. In this way, total cargo collection efficiency is improved. At the same time, by using the conveyor transport module, the container of each target cargo collection module may be merged and transported from the warehouse. Alternatively, by using the conveyor transport module, the plurality of containers are diverted and transported into the warehouse. It may further reduce a length of a path on which the handling robot needs to move, thereby improving movement efficiency of the handling robot, and improving efficiency of transporting the container.

In a possible example, each third-level conveyor is provided with an ejection port and a transfer apparatus corresponding to each cargo collection module in an extension direction of the third-level conveyor. The method further includes: controlling, when each third-level conveyor transports the plurality of containers to a position in which the at least one target cargo collection module lies, each transfer apparatus corresponding to the at least one target cargo collection module to transfer the plurality of containers from each third-level conveyor to each ejection port corresponding to the at least one target cargo collection module, so that the handling robot transports the plurality of containers from each ejection port to a rack of the at least one target cargo collection module; and controlling, when the handling robot transports the plurality of containers from the rack of the at least one target cargo collection module to each ejection port, each transfer apparatus to transfer the plurality of containers from each ejection port to each third-level conveyor, to transport the plurality of containers to the opening of the consolidation warehouse by using the conveyor transport module.

During specific implementation, when the container is put into the warehouse, after the third-level conveyor respectively transports the plurality of containers to the position in which the corresponding target cargo collection module lies, the transportation server controls the transfer apparatus corresponding to the target cargo collection module to transfer the containers from the third-level conveyor to the ejection port, so that the handling robot corresponding to the target cargo collection module transports the containers from the ejection port to the rack of the target cargo collection module. When the container is to exit from the warehouse, the handling robot may first transport the container from the rack to the ejection port, and then the transportation server controls the transfer apparatus to transfer the container at the ejection port to the third-level conveyor, so that the third-level conveyor is controlled to transport the container to the second-level conveyor, and transport the container to the first-level conveyor through the second-level conveyor, to transport the container to the opening of the consolidation warehouse through the first-level conveyor to get out of the warehouse.

It can be seen that, in this example, the transportation server controls the transfer apparatus to transfer the container, so that the container may be transferred out of the third-level conveyor and buffered at the ejection port when the container reaches the target cargo collection module. Compared with that the handling robot directly removes the container from the third-level conveyor, a problem that efficiency of transporting the container by the third-level conveyor is affected due to that the handling robot does not transport the container in time may be avoided, which is beneficial to improving overall transportation efficiency of the cargo collection transport system.

This application may divide the transport server into functional units based on the foregoing method examples. For example, each functional unit may be divided based on each corresponding function, or two or more functions may be integrated into one processing unit The integrated unit may be implemented in a form of hardware, or may be implemented in a form of a software function unit. It should be noted that, in embodiments of this application, division into the units is an example and is merely logical function division. There may be other division manner in an actual implementation.

FIG. 7a is a composition block diagram of functional units of a cargo collection transport device according to an embodiment of this application. The cargo collection transport device 70 may be applied to the transport server 100 in the cargo collection transport system shown in FIG. 1a or the transport server 100b in the cargo collection transport system shown in FIG. 1b. The cargo collection transport device 70 includes:
a first obtaining unit 710, configured to obtain a plurality of containers for the same wave;
a first determining unit 720, configured to determine at least one target cargo collection module corresponding to the plurality of containers; and
a first control unit 730, configured to control the handling robot corresponding to the at least one target cargo collection module to perform a first inbound operation or a first outbound operation on the plurality of containers; where
the first inbound operation comprises: controlling the handling robot corresponding to the at least one target cargo collection module to transport the plurality of containers from each third-level conveyor to the at least one target cargo collection module when the plurality of containers are diverted and transported from the opening of the consolidation warehouse to each second-level conveyor to which the at least one target cargo collection module correspondingly belongs through the first-level conveyor, and diverted and transported to each third-level conveyor to which the at least one target cargo collection module correspondingly belongs through each second-level conveyor, and transported to a position in which the at least one target cargo collection module lies through each third-level conveyor; and
the first outbound operation comprises: controlling the handling robot corresponding to the at least one target cargo collection module to take out the plurality of containers from a rack of the at least one target cargo collection module, and transferring the plurality of containers to each third-level conveyor to which the at least one target cargo collection module correspondingly belongs, so that the plurality of containers are transported to each second-level conveyor to which the at least one target cargo collection module correspondingly belongs through each third-level conveyor, transported and merged to the first-level conveyor through each second-level conveyor, and transported to the opening of the consolidation warehouse through the first-level conveyor.

In a possible example, in terms of the determining at least one target cargo collection module corresponding to the plurality of containers, the determining unit is specifically configured to: obtain a single transport quantity of the handling robot corresponding to the target cargo collection module; compare the single transport quantity with the quantity of the plurality of containers; and determine at least two cargo collection modules as the target cargo collection modules when the quantity of the plurality of containers is greater than the single transport quantity.

In a possible example, in terms of the determining at least one target cargo collection module corresponding to the plurality of containers, the determining unit is further configured to: evenly distribute transport tasks of the plurality of containers of the same wave to the at least two cargo collection modules.

This application may further divide the transportation server into functional units based on the foregoing method examples. For example, each functional unit may be divided based on each corresponding function, or two or more functions may be integrated into one processing unit The integrated unit may be implemented in a form of hardware, or may be implemented in a form of a software functional unit. It should be noted that, in embodiments of this application, division into the units is an example and is merely logical function division. There may be other division manner in an actual implementation.

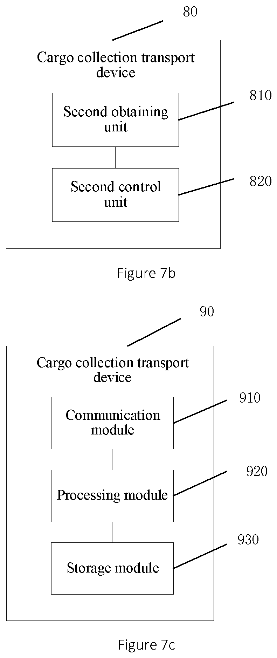

FIG. 7b is a composition block diagram of functional units of another cargo collection transport device according to an embodiment of this application. The cargo collection transport device 80 may be applied to the transport server 100 in the cargo collection transport system shown in FIG. 1a or the transportation server 100a in the cargo collection transport system shown in FIG. 1b. The cargo collection transport device 80 includes:
a second obtaining unit 810, configured to obtain at least one target cargo collection module, where the at least one target cargo collection module is a cargo collection module corresponding to a plurality of containers for the same wave; and
a second control unit 820, configured to control, according to the at least one target cargo collection module, the conveyor transport module to perform a second inbound operation or a second outbound operation on the plurality of containers; where
the second inbound operation comprises: controlling the first-level conveyor to divert and transport the plurality of containers from the opening of the consolidation warehouse to each second-level conveyor to which the at least one target cargo collection module correspondingly belongs, and controlling each second-level conveyor to divert and transport the plurality of containers to each third-level conveyor to which the at least one target cargo collection module correspondingly belongs, and controlling each third-level conveyor to transport the plurality of containers to a position in which the at least one target cargo collection module lies, so that the handling robot corresponding to the at least one target cargo collection module transports the plurality of containers from each third-level conveyor to the at least one target cargo collection module; and
the second outbound operation comprises: controlling each third-level conveyor to transport the plurality of containers to each second-level conveyor to which the at least one target cargo collection module correspondingly belongs, and controlling each second-level conveyor to transport and divert the plurality of containers to the first-level conveyor, and controlling the first-level conveyor to transport the plurality of containers to the opening of the consolidation warehouse when the handling robot corresponding to the at least one target cargo collection module takes out the plurality of containers from a rack of the at least one target cargo collection module, and transfers the plurality of containers to each third-level conveyor.

In a possible example, each third-level conveyor is provided with an ejection port and a transfer apparatus corresponding to each cargo collection module in an extension direction of the third-level conveyor. The control unit is specifically configured to: control, when each third-level conveyor transports the plurality of containers to a position in which the at least one target cargo collection module lies, each transfer apparatus corresponding to the at least one target cargo collection module to transfer the plurality of containers from each third-level conveyor to each ejection port corresponding to the at least one target cargo collection module, so that the handling robot transports the plurality of containers from each ejection port to a rack of the at least one target cargo collection module; and the control unit is specifically further configured to: control, when the handling robot transports the plurality of containers from the rack of the at least one target cargo collection module to each ejection port, each transfer apparatus to transfer the plurality of containers from each ejection port to each third-level conveyor, to transport the plurality of containers to the opening of the consolidation warehouse by using the conveyor transport module.

When integrated units are used, the composition block diagram of the functional units of the cargo collection transport device according to the embodiments of this application is shown in FIG. 7c. In FIG. 7c, the cargo collection transport device 90 includes a processing module 920 and a communication module 910. The processing module 920 is configured to perform control and management on an action of the cargo collection transport device, for example, steps performed by the first obtaining unit 710, the first determining unit 720, and the first control unit 730. Alternatively, for another example, steps performed by the second obtaining unit 810 and the second control unit 820, and/or other processes configured to perform the technologies described in this specification. The communication module 910 is configured to support interaction between the cargo collection transport device 90 and another apparatus. As shown in FIG. 7c, the cargo collection transport device 90 may further include a storage module 930, and the storage module 930 is configured to store program codes and data of the cargo collection transport device 90.

The processing module 920 may be a processor or a controller, for example, may be a Central Processing Unit (CPU), a general purpose processor, a Digital Signal Processor (DSP), an ASIC, an FPGA, or other programmable logic device, a transistor logic device, a hardware component, or any combination thereof. It may implement or execute various exemplary logical blocks, modules, and circuits described in combination with the content disclosed in the embodiments of this application. Alternatively, the processor may be a combination of processors implementing a computing function, for example, a combination of one or more microprocessors, or a combination of a DSP and a microprocessor. The communication module 910 may be a transceiver, an RF circuit, a communication interface, or the like. The storage module 930 may be a memory.

All related content of each scenario involved in the foregoing method embodiments may be referenced to a function description of a corresponding functional module, and details are not described herein again. The foregoing cargo collection transport device may perform steps performed by the transportation server or the transport server in the foregoing cargo collection transport method.

An embodiment of this application further provides a computer storage medium. The computer storage medium stores a computer program for electronic data exchange. The computer program enables a computer to perform some or all steps of any method set forth in the foregoing method embodiments, and the foregoing computer includes a server.

It should be noted that, for ease of description, the foregoing method embodiments are described as a series of action combinations. However, persons skilled in the art should appreciate that this application is not limited to the described order of the actions, because according to this application, some steps may be performed in other orders or simultaneously. In addition, a person skilled in the art should also know that all the embodiments described in this specification are preferred embodiments, and the related actions and modules are not necessarily mandatory to this application.

In the foregoing embodiments, the descriptions of the embodiments have respective focuses. For a part that is not described in detail in an embodiment, refer to related descriptions in other embodiments.

In the several embodiments provided in this application, it should be understood that the disclosed device may be implemented in other manners. For example, the described device embodiment is merely an example. For example, the foregoing unit division is merely logical function division and may be other division during an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electric or other forms.

The units described as discrete parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software function unit and sold or used as an independent product, the integrated unit may be stored in a computer readable memory. Based on such an understanding, the technical solutions of this application essentially, or the part contributing to the prior art, or all or some of the technical solutions may be implemented in a form of a software product. The computer software product is stored in a memory and includes several instructions for instructing a computer apparatus (which may be a personal computer, a server, a network apparatus, or the like) to perform all or some of the steps of the foregoing methods in the embodiments of this application. The foregoing memory includes: any medium that can store program codes, such as a USB flash drive, a Read-Only Memory (ROM), a Random Access Memory (RAM), a removable hard disk, a magnetic disk, or an optical disc.

A person of ordinary skill in the art may understand that all or some of the steps of the methods in the foregoing embodiments may be implemented by a program instructing relevant hardware. The program may be stored in a computer readable memory. The memory may include a flash drive, a Read-Only Memory (ROM), a Random Access Memory (RAM), a magnetic disk, an optical disc, or the like.

The embodiments of this application are described in detail above, and the principles and implementations of this application are described herein by using specific examples. The descriptions of the foregoing embodiments are merely intended to help understand the method and core ideas of this application. Meanwhile, a person of ordinary skill in the art may make modifications to the specific implementations and application scopes according to the ideas of this application. In conclusion, the content of this specification should not be construed as a limitation to this application.

## Claims

1. A system for cargo collection transport, wherein the system for cargo collection transport comprises a transportation server, a conveyor transport module, a handling robot, and a plurality of cargo collection modules;
the transportation server is configured to control start and stop and a transport direction of the conveyor transport module;
the conveyor transport module is configured to transmit a container, so that the container circulates between the cargo collection module and an opening of a consolidation warehouse, the conveyor transport module comprises a first-level conveyor, a second-level conveyor, and a third-level conveyor, one end of the first-level conveyor is disposed at the opening of the consolidation warehouse, another end extends into the consolidation warehouse, at least one second-level conveyor is connected in an extension direction of the first-level conveyor, and at least one third-level conveyor is connected to each second-level conveyor; and at least one cargo collection module is disposed on a side of each third-level conveyor in the extension direction;
the cargo collection module is configured to store a container, the cargo collection module is provided with a rack, and the container is stored on the rack; and
the handling robot is configured to transport a container, so that a container circulates between the third-level conveyor and the rack.

2. The system for cargo collection transport according to claim 1, wherein one third-level conveyor is connected to each access point on the second-level conveyor, and the cargo collection module is disposed on at least one side of the third-level conveyor in the extension direction.

3. The system for cargo collection transport according to claim 1, wherein two third-level conveyors in parallel are connected to each access point on the second-level conveyor, and the cargo collection module is disposed on an opposite side of the two third-level conveyors.

4. The system for cargo collection transport according to claim 1, wherein each third-level conveyor is provided with an ejection port and a transfer apparatus corresponding to each cargo collection module in the extension direction of the third-level conveyor, and the transfer apparatus is configured to transfer a container on the third-level conveyor to the ejection port; or the transfer apparatus is configured to transfer a container at the ejection port to the third-level conveyor.

5. The system for cargo collection transport according to claim 4, wherein at least one aisle is formed through arranging the rack of the cargo collection module, and one handling robot manages the at least one aisle.

6. The system for cargo collection transport according to claim 5, wherein when the handling robot manages the aisle, the third-level conveyor is provided with the transfer apparatus and the ejection port corresponding to each aisle.

7. The system for cargo collection transport according to claim 1, wherein each of the plurality of cargo collection modules is provided with a charging station, and the charging station is configured to charge the handling robot.

8. A method for cargo collection transport, applied to a transport server in a cargo collection transport system, wherein the transport server is configured to control a handling robot in a cargo collection transport system, the cargo collection transport system comprises the transport server, a conveyor transport module, a cargo collection module, and the handling robot, the conveyor transport module comprises a first-level conveyor, a second-level conveyor, and a third-level conveyor, one end of the first-level conveyor is disposed at an opening of a consolidation warehouse, another end extends into a consolidation warehouse, at least one second-level conveyor is connected in an extension direction of the first-level conveyor, and at least one third-level conveyor is connected to each second-level conveyor; at least one cargo collection module is disposed on a side of each third-level conveyor in the extension direction; and the method comprises:
obtaining a plurality of containers for the same wave;
determining at least one target cargo collection module corresponding to the plurality of containers; and
controlling the handling robot corresponding to the at least one target cargo collection module to perform a first inbound operation or a first outbound operation on the plurality of containers; wherein
the first inbound operation comprises: controlling the handling robot corresponding to the at least one target cargo collection module to transport the plurality of containers from each third-level conveyor to the at least one target cargo collection module when the plurality of containers are diverted and transported from the opening of the consolidation warehouse to each second-level conveyor to which the at least one target cargo collection module correspondingly belongs through the first-level conveyor, and diverted and transported to each third-level conveyor to which the at least one target cargo collection module correspondingly belongs through each second-level conveyor, and transported to a position in which the at least one target cargo collection module lies through each third-level conveyor; and
the first outbound operation comprises: controlling the handling robot corresponding to the at least one target cargo collection module to take out the plurality of containers from a rack of the at least one target cargo collection module, and transferring the plurality of containers to each third-level conveyor to which the at least one target cargo collection module correspondingly belongs, so that the plurality of containers are transported to each second-level conveyor to which the at least one target cargo collection module correspondingly belongs through each third-level conveyor, and transported and merged to the first-level conveyor through each second-level conveyor, and transported to the opening of the consolidation warehouse through the first-level conveyor.

9. The method according to claim 8, wherein the determining at least one target cargo collection module corresponding to the plurality of containers comprises:
obtaining a single transport quantity of the handling robot corresponding to the target cargo collection module;
comparing the single transport quantity with the quantity of the plurality of containers; and
determining at least two cargo collection modules as the target cargo collection modules when the quantity of the plurality of containers is greater than the single transport quantity.

10. The method according to claim 8, wherein the determining at least one target cargo collection module corresponding to the plurality of containers further comprises:
evenly distributing transport tasks of the same wave of the plurality of containers to the at least two cargo collection modules.

11. A method for cargo collection transport, applied to a transportation server in a cargo collection transport system, wherein the transportation server is configured to control a conveyor transport module in a cargo collection transport system, the cargo collection transport system comprises the transportation server, a transport server, the conveyor transport module, a cargo collection module, and a handling robot, the transport server is configured to control the handling robot; the conveyor transport module comprises a first-level conveyor, a second-level conveyor, and a third-level conveyor, one end of the first-level conveyor is disposed at an opening of a consolidation warehouse, another end extends into a consolidation warehouse, at least one second-level conveyor is connected in an extension direction of the first-level conveyor, and at least one third-level conveyor is connected to each second-level conveyor; at least one cargo collection module is disposed on a side of each third-level conveyor in the extension direction; and the method comprises:
obtaining at least one target cargo collection module, wherein the at least one target cargo collection module is a cargo collection module corresponding to a plurality of containers for the same wave; and
controlling, according to the at least one target cargo collection module, the conveyor transport module to perform a second inbound operation or a second outbound operation on the plurality of containers; wherein
the second inbound operation comprises: controlling the first-level conveyor to divert and transport the plurality of containers from the opening of the consolidation warehouse to each second-level conveyor to which the at least one target cargo collection module correspondingly belongs, and controlling each second-level conveyor to divert and transport the plurality of containers to each third-level conveyor to which the at least one target cargo collection module correspondingly belongs, and controlling each third-level conveyor to transport the plurality of containers to a position in which the at least one target cargo collection module lies, so that the handling robot corresponding to the at least one target cargo collection module transports the plurality of containers from each third-level conveyor to the at least one target cargo collection module; and
the second outbound operation comprises: when the handling robot corresponding to the at least one target cargo collection module takes out the plurality of containers from a rack of the at least one target cargo collection module, and transfers the plurality of containers to each third-level conveyor, controlling each third-level conveyor to transport the plurality of containers to each second-level conveyor to which the at least one target cargo collection module correspondingly belongs, and controlling each second-level conveyor to transport and divert the plurality of containers to the first-level conveyor, and controlling the first-level conveyor to transport the plurality of containers to the opening of the consolidation warehouse.

12. The method according to claim 11, wherein each third-level conveyor is provided with an ejection port and a transfer apparatus corresponding to each cargo collection module in the extension direction of the third-level conveyor, and the method further comprises:
controlling, when each third-level conveyor transports the plurality of containers to the position in which the at least one target cargo collection module lies, each transfer apparatus corresponding to the at least one target cargo collection module to transfer the plurality of containers from each third-level conveyor to each ejection port corresponding to the at least one target cargo collection module, so that the handling robot transports the plurality of containers from each ejection port to a rack of the at least one target cargo collection module; and
controlling each transfer apparatus to transfer the plurality of containers from each ejection port to each third-level conveyor when the handling robot transports the plurality of containers from a rack of the at least one target cargo collection module to each ejection port, to transport the plurality of containers to the opening of a consolidation warehouse by using the conveyor transport module.

13. A device for cargo collection transport, applied to a transport server in a cargo collection transport system, wherein the transport server is configured to control a handling robot in a cargo collection transport system, the cargo collection transport system comprises the transport server, a conveyor transport module, a cargo collection module, and the handling robot, the conveyor transport module comprises a first-level conveyor, a second-level conveyor, and a third-level conveyor, one end of the first-level conveyor is disposed at an opening of a consolidation warehouse, another end extends into a consolidation warehouse, at least one second-level conveyor is connected in an extension direction of the first-level conveyor, and at least one third-level conveyor is connected to each second-level conveyor; at least one cargo collection module is disposed on a side of each third-level conveyor in the extension direction; and the device comprises:
a first obtaining unit, configured to obtain a plurality of containers for the same wave;
a first determining unit, configured to determine at least one target cargo collection module corresponding to the plurality of containers; and
a first control unit, configured to control the handling robot corresponding to the at least one target cargo collection module to perform a first inbound operation or a first outbound operation on the plurality of containers; wherein
the first inbound operation comprises: controlling the handling robot corresponding to the at least one target cargo collection module to transport the plurality of containers from each third-level conveyor to the at least one target cargo collection module when the plurality of containers are diverted and transported from the opening of the consolidation warehouse to each second-level conveyor to which the at least one target cargo collection module correspondingly belongs through the first-level conveyor, and diverted and transported to each third-level conveyor to which the at least one target cargo collection module correspondingly belongs through each second-level conveyor, and transported to a position in which the at least one target cargo collection module lies through each third-level conveyor; and
the first outbound operation comprises: controlling the handling robot corresponding to the at least one target cargo collection module to take out the plurality of containers from a rack of the at least one target cargo collection module, and transferring the plurality of containers to each of the third-level conveyors to which the at least one target cargo collection module correspondingly belongs, so that the plurality of containers are transported to each second-level conveyor to which the at least one target cargo collection module correspondingly belongs through each of the third-level conveyors, transported and merged to the first-level conveyor through each second-level conveyor, and transported to the opening of the consolidation warehouse through the first-level conveyor.

14. A device for cargo collection transport, applied to a transportation server in a cargo collection transport system, wherein the transportation server is configured to control a conveyor transport module in a cargo collection transport system, the cargo collection transport system comprises the transportation server, a transport server, the conveyor transport module, a cargo collection module, and a handling robot, the transport server is configured to control the handling robot; the conveyor transport module comprises a first-level conveyor, a second-level conveyor, and a third-level conveyor, one end of the first-level conveyor is disposed at an opening of a consolidation warehouse, another end extends into a consolidation warehouse, at least one second-level conveyor is connected in an extension direction of the first-level conveyor, and at least one third-level conveyor is connected to each second-level conveyor; at least one cargo collection module is disposed on a side of each third-level conveyor in the extension direction; and the device comprises:
a second obtaining unit, configured to obtain at least one target cargo collection module, wherein the at least one target cargo collection module is a cargo collection module corresponding to a plurality of containers for the same wave; and
a second control unit, configured to control, according to the at least one target cargo collection module, the conveyor transport module to perform a second inbound operation or a second outbound operation on the plurality of containers; wherein
the second inbound operation comprises: controlling the first-level conveyor to divert and transport the plurality of containers from the opening of the consolidation warehouse to each second-level conveyor to which the at least one target cargo collection module correspondingly belongs, and controlling each second-level conveyor to divert and transport the plurality of containers to each third-level conveyor to which the at least one target cargo collection module correspondingly belongs, and controlling each third-level conveyor to transport the plurality of containers to a position in which the at least one target cargo collection module lies, so that the handling robot corresponding to the at least one target cargo collection module transports the plurality of containers from each third-level conveyor to the at least one target cargo collection module; and
the second outbound operation comprises: when the handling robot corresponding to the at least one target cargo collection module takes out the plurality of containers from a rack of the at least one target cargo collection module, and transfers the plurality of containers to each third-level conveyor, controlling each third-level conveyor to transport the plurality of containers to each second-level conveyor to which the at least one target cargo collection module correspondingly belongs, and controlling each second-level conveyor to transport and divert the plurality of containers to the first-level conveyor, and controlling the first-level conveyor to transport the plurality of containers to the opening of the consolidation warehouse.

15. A server, comprising a processor, a memory, a communication interface, and one or more programs, wherein the one or more programs are stored in the memory and configured to be executed by the processor, and the programs comprise instructions for performing the steps in the method according to any one of claims 8 to 12.

16. A computer readable storage medium, storing a computer program for electronic data exchange, wherein the computer program enables a computer to perform the steps in the method according to any one of claims 8 to 12.
